# EUROPEAN PATENT APPLICATION

(11) **EP 4 852 133 A1**
(43) Date of publication of application: **09.12.2026**
(21) Application number: 25747534.3
(22) Date of filing: 15.01.2025
(51) Int. Cl.: H01M 10/42

(54) **BATTERY MANAGEMENT SYSTEM AND METHOD AND ENERGY STORAGE APPARATUS**

(30) Priority: 30.01.2024 CN 202410124281
(71) Applicant: Trina Storage Solutions (Jiangsu) Co., Ltd, Changzhou, Jiangsu 213031 (CN)
(72) Inventor: XU, Jie, hangzhou, Jiangsu 213031 (CN); ZHANG, Hongquan, hangzhou, Jiangsu 213031 (CN); PENG, Xiang, hangzhou, Jiangsu 213031 (CN); WU, Boxiang, hangzhou, Jiangsu 213031 (CN); ZHENG, Cuicui, hangzhou, Jiangsu 213031 (CN); XU, Wei, hangzhou, Jiangsu 213031 (CN); YANG, Kai, hangzhou, Jiangsu 213031 (CN)
(74) Representative: Casalonga
(86) International application number: PCT/CN2025/072441
(87) International publication number: WO 2025/161960

(57) **Abstract**

Provided in the present application are a battery management system and method and an energy storage apparatus. The battery management system comprises microcontroller units and a collection unit, wherein each microcontroller unit is used for receiving and/or sending a control signal, the collection unit is used for collecting cell parameters, two ends of the collection unit are connected to the microcontroller units, the collection unit comprises at least one cell management unit, each cell management unit is provided with an analog front end, each analog front end is used for connecting to one cell for collection of the cell parameters, there are two microcontroller units and two cell management units, each cell management unit is connected to one microcontroller unit, and the two microcontroller units share one or more parameter signals and the control signals.

## Description

### Technical Field

The present application mainly relates to battery optimization and management technology field, particularly a battery management system and method and an energy storage apparatus.

### Background

In recent years, the energy storage industry has experienced explosive growth. Compared to other energy storage technologies, lithium-ion batteries possess significant competitive advantages due to factors such as rapid advancements in production technology and gradually declining manufacturing costs, and the market penetration of lithium-ion batteries in the energy storage field is increasingly high. As an electronic device that monitors and manages batteries, the battery management system (BMS) is one of the core components of an energy storage system, with the capability to monitor and control batteries, relaying collected battery information to users in real-time, while also adjusting parameters based on the collected information to fully optimize battery performance. The battery management system manages and maintains individual battery cells intelligently, prevents them from overcharging and over-discharging, and extends battery service life and monitors battery status. The functional safety of lithium-ion batteries is critical to the safe and stable operation of the entire energy storage station.

In an energy storage system, the battery management system typically employs a three-tiered architecture (Battery Management Unit (BMU), Battery Control Unit (BCU), and Battery Array Unit (BAU)) to achieve hierarchical management and control from the battery pack, to the cluster, and up to the array. The primary function of the BMU is typically to collect individual cell voltages and temperatures and is responsible for executing cell balancing strategies. With the increasing size and capacity of modern energy storage cells, the requirement for refined management of individual cells has consequently become more demanding. However, the existing three-tiered architecture battery management system cannot provide refined management for module-less energy storage apparatus. Moreover, as the BMU's responsibilities within the battery management system continue to grow, it consequently has the highest probability of failure.

Furthermore, the dual microcontroller units (MCUs) architecture primarily operates in an independent manner in current battery management system. In this dual MCUs configuration, the battery management system is connected to the battery pack via connectors and data collection cables to obtain parameters such as cell voltage and temperature, and the parameters are input into the first MCU for processing, which then controls and protects external equipment through its output interface. The second MCU monitors the operational status, control status, and health status of the first MCU. If the first MCU becomes abnormal or fails, the second MCU activates and takes over the tasks of the first MCU, allowing the battery management system to continue operating normally, thereby enhancing the system's safety level and reliability. However, this independent operation mode of the dual MCUs has the following shortcomings: 1.The battery management system does not fully utilize the functionality of the second MCU, employing the second MCU merely as a backup, which leads to a waste of resources. 2.The external equipment control primarily operates in a one-to-one control mode, meaning the external equipment peripheral is controlled by a single MCU, with no dual-control implemented, which significantly raises the system risk.

### Summary

The technical problem to be solved by the present application is to provide a battery management system and method and an energy storage apparatus, which can manage each cell by distributing the management function from a centralized slave controller for the entire battery pack to individual cell management units, so as to allow for more balanced workload of each component, thus reducing the risk of slave control failures; and the battery management system can fully use the two microcontroller units, so as to make system operation safer and more reliable.

In order to solve the above technical problems, firstly, the present application provides a battery management system, comprising: a microcontroller unit and a collection unit, wherein the microcontroller unit is used for receiving and/or sending a control signal, and the collection unit is used for collecting cell parameters; wherein two ends of the collection unit are connected to the microcontroller unit, and the collection unit comprises at least one cell management unit, each cell management unit is provided with an analog front end, each analog front end is used for connecting to one cell for collection of the cell parameters; the microcontroller unit comprises a first microcontroller unit and a second microcontroller unit, and the cell management unit comprises a first set of cell management units and a second set of cell management units, wherein the first set of cell management units is connected to the first microcontroller unit, and the second set of cell management units is connected to the second microcontroller unit, and each cell management unit in the first set of cell management units is used for connecting to one cell, and each cell management unit in the second set of cell management units is used for connecting to one cell, so as to collect the cell parameters; and the first microcontroller unit is connected to the second microcontroller unit, and the first microcontroller unit and the second microcontroller unit share one or more parameter signals and control signals.

In one embodiment of the present application, the parameter signals comprise cell parameters and an AFE Identification Code, and the control signals comprise control signals of external equipment and control signals of collection unit.

In one embodiment of the present application, the battery management system further comprising: a first isolation transformer and a second isolation transformer, wherein in the first set of cell management units, the first and last cell management units therein are respectively connected to the first microcontroller unit via one first isolation transformer, and one first isolation transformer is connected between every two adjacent cell management units, and in the second set of cell management units, the first and last cell management units therein are respectively connected to the second microcontroller unit via one second isolation transformer, and one second isolation transformer is connected between every two adjacent cell management units.

In one embodiment of the present application, the battery management system further comprising: a first bridging unit and a second bridging unit, wherein in the first set of cell management units, the first isolation transformers at the two ends are respectively connected to the first microcontroller unit via one first bridging unit; and in the second set of cell management units, the second isolation transformers at the two ends are respectively connected to the second microcontroller unit via one second bridging unit.

In one embodiment of the present application, the first bridging unit and the second bridging unit employ a dual-channel SPI bridging circuit.

In one embodiment of the present application, a signal input/output terminal of the first microcontroller unit is connected to pull-up resistor and/or a signal input/output terminal of the second microcontroller unit is connected to pull-up resistor.

In one embodiment of the present application, a signal input/output terminal, which connects the first bridging unit and/or the second bridging unit to the microcontroller unit, is connected to a current-limiting resistor or an inductor.

In one embodiment of the present application, a signal input/output terminal, which connects the first bridging unit and/or the second bridging unit to a cell management unit, is connected to one end of a transient voltage suppression diode, wherein another end of the transient voltage suppression diode is grounded.

In one embodiment of the present application, the battery management system further comprising: a storage unit, wherein the storage unit is connected to the first microcontroller unit and the second microcontroller unit, and is used for storing the parameter signals and the control signals.

In one embodiment of the present application, the first microcontroller unit and the second microcontroller unit are connected via a serial or parallel communication link.

In one embodiment of the present application, the cell management unit is further provided with a MOSFET, wherein the MOSFET is connected to the analog front end and is used for bypassing the cell connected to the cell management unit when the MOSFET is turned on.

Secondly, the present application provides an energy storage apparatus, comprising at least one battery cluster formed by a plurality of cells connected in series, further comprising the battery management system according to any one of the above embodiment, and each analog front end in the battery management system is connected to one cell.

Thirdly, the present application provides a battery management method, which is applied to the battery management system according to any one of the above embodiment, and comprises the steps of: receiving parameters collected by the collection unit, wherein the parameters comprise the AFE Identification Code and the cell parameters corresponding to the analog front end; judging an operational status of the battery management system based on the parameters; controlling the battery management system and external equipment based on the operational status, wherein controlling the external equipment comprises receiving and/or sending control signals, and the control signals are used for controlling the external equipment.

Furthermore, the present application provides a battery management method, which is applied to the battery management system according to the above embodiment, and comprises the steps of: receiving parameters collected by the collection unit, wherein the parameters comprise the AFE Identification Code and the cell parameters corresponding to the analog front end; judging an operational status of the battery management system based on the parameters; controlling the battery management system based on the operational status; and when a parameter received by the microcontroller unit includes an AFE Identification Code but lacks cell parameters, it is determined that a cell has failed, and the microcontroller unit controls the cell to be bypassed from the main circuit via a MOSFET connected to the analog front end.

In one embodiment of the present application, the step of judging the operational status of the battery management system based on the parameters further comprises: when the quantity of the AFE Identification Code in the parameters collected by the collection unit is less than the quantity of the analog front ends in the collection unit, comparing the returned AFE Identification Code in the parameters collected by the collection unit with identification codes of the analog front ends in the collection unit to determine the failed analog front end, and controlling external equipment to issue an alarm indicating the failure of the analog front end.

Finally, the present application provides a battery management method, which is applied to the battery management system according to any one of the above embodiment, and comprises the steps of: receiving parameters collected by the collection unit, wherein the parameters comprise parameters collected by a first set of cell management units and received by a first microcontroller unit, and parameters collected by a second set of cell management units and received by a second microcontroller unit, wherein the first microcontroller unit and the second microcontroller unit share one or more parameter signals and control signals; judging an operational status of the battery management system based on the parameters; controlling the battery management system based on the operational status; wherein when the first microcontroller unit detects that data of the second microcontroller unit is inaccessible, the first microcontroller unit controls external equipment to disconnect from the second microcontroller unit, and disconnects cells connected to the second microcontroller unit from a main circuit; when the second microcontroller unit detects that data of the first microcontroller unit is inaccessible, the second microcontroller unit controls the external equipment to disconnect from the first microcontroller unit, and disconnects cells connected to the first microcontroller unit from the main circuit.

Compared with the prior art, the present application offers the following beneficial effects:
The collection unit, with each cell management unit is directly connected to a cell and manage the cell directly, consequently, in contrast to existing battery management system where one BMU centrally controls all cells in a battery pack, the present battery management system employs one cell management unit for the refined management of each cell, means that it distributes the management function from a centralized slave controller for the entire battery pack to individual cell management units, so as to allow for more balanced workload of each component, thus reducing the risk of slave control failures. Furthermore, by implementing a configuration with a first microcontroller unit, a second microcontroller unit and two sets of cell management units, with the first microcontroller unit is connected to the second microcontroller unit, and the first microcontroller unit and the second microcontroller unit share one or more parameter signals and control signals, the battery management system can utilize both MCUs simultaneously to control the cell management unit during normal operation, and is responsible for collecting data from all cells, performing cell balancing and controlling external equipment, fully leveraging the utility of both MCUs. Moreover, if one MCU becomes abnormal, the other can maintain the normal operation of the battery management system, thereby ensuring safer and more reliable system performance.

### Brief Description of the Drawings

The above-mentioned and other features, properties, and advantages of the present application will become more apparent from the following description of embodiments in conjunction with the accompanying drawings. In the drawings:
Fig. 1 is a schematic structural diagram of a battery management system according to an embodiment of the present application.
Fig. 2 is a schematic circuit diagram of a first set of cell management units in a battery management system according to an embodiment of the present application.
Fig. 3 is a schematic circuit diagram of a second set of cell management units in a battery management system according to an embodiment of the present application.
Fig. 4 is a schematic circuit diagram of a cell management unit in a battery management system according to an embodiment of the present application.
Fig. 5 is a schematic circuit diagram illustrating the connection between a first microcontroller unit and a cell management unit in a battery management system according to an embodiment of the present application.
Fig. 6 is a schematic circuit diagram illustrating the connection between a second microcontroller unit and a cell management unit in a battery management system according to an embodiment of the present application.
Fig. 7 is a schematic flowchart of a battery management method according to an embodiment of the present application.
Fig. 8 is another schematic flowchart of a battery management method according to an embodiment of the present application.
Fig. 9 is yet another schematic flowchart of a battery management method according to an embodiment of the present application.

### Detailed Description

The present application will be further explained below with reference to the specific embodiments and the accompanying drawings. The following description provides numerous specific details to facilitate a thorough understanding of the present application. However, it is apparent that the present application may be implemented in various other ways which different from those described herein. Those skilled in the art can make similar modifications and adaptations based on actual application scenarios without departing from the spirit of the present application. Therefore, the protection scope of the present application should not be limited by the content of these specific embodiments.

For example, when a first feature is described subsequently in the specification as being formed "on," "above," or "on top of" a second feature, this may encompass embodiments where the first and second features are formed in direct contact, as well as embodiments where additional features are formed between them, such that the first and second features may not be in direct contact. Furthermore, when a first element is described as being "connected to" or "coupled with" a second element, such description includes embodiments where the first and second elements are directly connected or joined, and also includes embodiments where one or more intervening elements are utilized to indirectly connect or join the first and second elements.

While the present application has been disclosed above with reference to preferred embodiments, it is not intended to limit the present application. Any person skilled in the art may make modifications and variations without departing from the spirit and scope of the present application. Therefore, any modifications, equivalent changes, and amendments made to the above embodiments based on the technical essence of the present application, without departing from its technical scheme, shall fall within the protection scope defined by the claims of the present application.

An embodiment of the present application provides a battery management system, comprising a microcontroller unit and a collection unit, wherein the microcontroller unit is used for receiving and/or sending a control signal, and the collection unit is used for collecting cell parameters, wherein two ends of the collection unit are connected to the microcontroller unit, and the collection unit comprises at least one cell management unit, each cell management unit is provided with an analog front end(AFE), each analog front end is used for connecting to one cell for collection of the cell parameters; the microcontroller unit comprises a first microcontroller unit and a second microcontroller unit, and the cell management unit comprises a first set of cell management units and a second set of cell management units; wherein the first set of cell management units is connected to the first microcontroller unit, and the second set of cell management units is connected to the second microcontroller unit; and each cell management unit in the first set of cell management units is used for connecting to one cell, and each cell management unit in the second set of cell management units is used for connecting to one cell, so as to collect the cell parameters, and the first microcontroller unit is connected to the second microcontroller unit, and the first microcontroller unit and the second microcontroller unit share one or more parameter signals and control signals.

Furthermore, the parameter signals comprise cell parameters and an AFE Identification Code, and the control signals comprise control signals of external equipment and control signals of collection unit.

In this embodiment, each cell management unit manages one cell, which refines the management granularity. This achieves a shift from managing each battery module or pack to the direct management of individual cells, thereby realizing refined cell management, and effectively addresses the efficiency and safety challenges of energy storage systems, thus reducing the risk of slave control failures and so as to make system operation safer and more reliable.

The cell management units employed are single-cell management units, that is, each cell is assigned one cell management unit, and each unit collects parameters from only one cell, so there is no need to design separate control and collection modules for each cell management unit. Each cell management unit can collect cell data independently, such as voltage, internal resistance and temperature, leading to a reduction in the total system cost.

In this embodiment, the battery management system adopts a dual microcontroller unit architecture, comprising a first microcontroller unit and a second microcontroller unit. The two microcontroller units operate concurrently rather than in a switched manner, with each has its own advantages, thereby avoiding resource waste. Compared to traditional solutions, this approach saves half the number of microcontroller units and increases the device utilization rate of the battery management system. Regarding the control of external equipment, both the first microcontroller unit and second microcontroller unit are capable of controlling external equipment simultaneously, even if one microcontroller unit fails, the external equipment can still be effectively controlled, thereby safeguarding the battery management system. By way of example, if the first microcontroller unit fails, the second microcontroller unit can effectively control the external equipment and protect the system safety utilizing the control information, owing to the real-time sharing of parameter signals and control signals between the first microcontroller unit and the second microcontroller unit. Similarly, if the second microcontroller unit fails, the first microcontroller unit is equally capable of effectively controlling the external equipment.

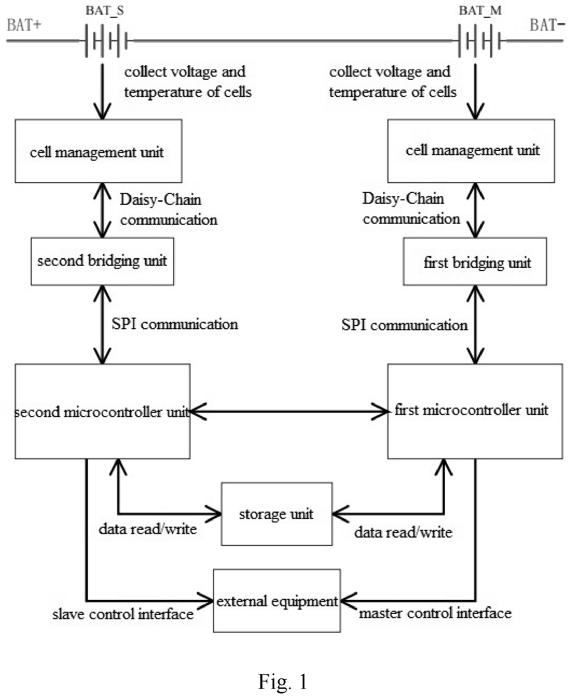

Fig. 1 is a schematic structural diagram of a battery management system according to an embodiment of the present application. Referring to Fig. 1, the battery management system comprises a first microcontroller unit and a second microcontroller unit. The first microcontroller unit and the second microcontroller unit are capable of simultaneously performing the following tasks: controlling their respective cell management units to collect data (parameter signals) from the cells. In this embodiment, the battery cluster is divided into two parts: BAT_M (a master battery cluster portion, composed of a first set of cells) and BAT_S (a slave battery cluster portion, composed of the remaining cells). Herein, the first microcontroller unit controls its corresponding first set of cell management units to collect parameters such as voltage and temperature from the cells of BAT_M, and also calculates the collection accuracy for these parameters. The second acquisition controls its corresponding second set of cell management units to collect parameters such as voltage and temperature from the cells of BAT_S, and likewise calculates the collection accuracy for the corresponding parameters. The first microcontroller unit and the second microcontroller unit are in communication, enabling real-time data interaction and mutual monitoring of each other's operational status. Consequently, even if one microcontroller unit fails, the battery management system can continue to operate as long as the other microcontroller unit functions normally, thereby enhancing system safety.

In this embodiment, the centralized battery management system employing the Daisy-chain communication technology offers a cost advantage over the original distributed architecture system. The Daisy-chain communication eliminates the need for CAN (Controller Area Network) chips on the main and slave boards, replacing them with converter chips, and these converter chips provide a significant cost advantage over CAN chips.

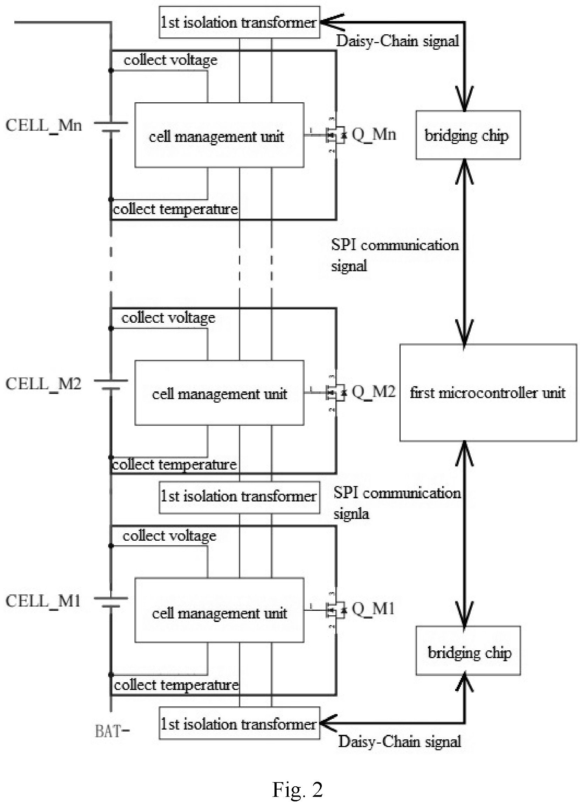

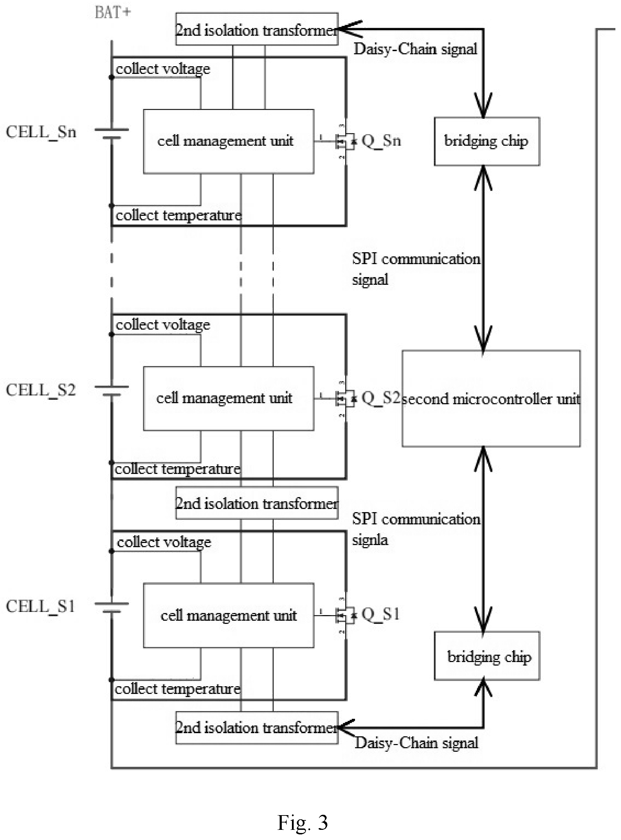

Fig. 2 is a schematic circuit diagram of a first set of cell management units in a battery management system according to an embodiment of the present application. Fig. 3 is a schematic circuit diagram of a second set of cell management units in the battery management system according to an embodiment of the present application. In practice, all cells in Fig. 2 and Fig. 3 are connected in series. For illustrative convenience, this embodiment depicts the first microcontroller unit and the second microcontroller unit separately. Referring to Fig. 2 and Fig. 3, a microcontroller unit (e.g., the first microcontroller unit or second microcontroller unit) of the battery management system can convert signals into differential signals via a communication converter chip, and communicate with the first cell management unit using these differential signals. The differential signal originates from the first cell management unit and then passes sequentially through the subsequent cell management unit, in this way, the microcontroller unit is eventually able to communicate with all cell management units. In this embodiment, the serial communication signals are converted into Daisy-chained differential communication signals, which effectively enhances the robustness and anti-interference capability of the battery management system.

As a preferred implementation, the first set of cell management units collects parameters from half of the cells in the battery cluster, and the second set of cell management units collects parameters from the other half of the cells in the battery cluster. This configuration enables the most sufficient and coordinated utilization of the control function, data receiving and sending function, and cell balancing function of both microcontroller units during normal operation of the battery management system, thereby resulting in higher operational efficiency.

In this embodiment, the first microcontroller unit and the second microcontroller unit may be connected via a serial bus, such as an SPI (Serial Peripheral Interface) connection, to achieve data interaction. Alternatively, a parallel communication link may be employed for this purpose.

By way of example, the battery management system adopts a dual microcontroller units configuration, while the first microcontroller unit is responsible for all data processing within the system and for controlling the cell management units to collect parameters from half of the cells, and the second microcontroller unit is responsible for controlling the cell management units to collect parameters from the other half of the cells. The second microcontroller unit transmits the data it receives to the first microcontroller unit via a communication interface after processing. The first microcontroller unit then uniformly performs tasks such as data accuracy judgment, State of Charge (SOC) calculation, and system status determination. Furthermore, both the first microcontroller unit and the second microcontroller unit simultaneously control two pins of the external equipment, thus, if either the first microcontroller unit is damaged or the second microcontroller unit fails, the other microcontroller unit can still control the external equipment to ensure its safety.

Referring to Fig. 2 and Fig. 3, all cells are connected in series via their positive and negative terminals to form one battery cluster. The battery cluster consists of 416 cells, providing a direct current (DC) voltage of 1500V. The first microcontroller unit and the second microcontroller unit are responsible for collecting data, such as voltage and temperature, from the lower 208 and the upper 208 cells respectively. The cells from the total negative terminal (BAT-) to the total positive terminal (BAT+) of the battery cluster are divided into two sections. Specifically, the battery cluster with voltage of 1500V is composed of 416 cells, therefore, the symbol "n" represents 208 in the figures, that is, the first microcontroller unit manages the lower 208 cells, labeled CELL_M1, CELL_M2, ... CELL_Mn, and the second microcontroller unit manages the upper 208 cells, labeled CELL_S1, CELL_S2, ... CELL_Sn.

In existing battery management systems, one BMU manages an entire battery pack and cannot provide refined management for each individual cell. When a fault is detected in a specific cell, the system can only shut down the entire battery pack, the entire battery cluster, or even the whole energy storage apparatus, which significantly impacts system operation.

Based on the above considerations, in one example, the cell management unit is further provided with a MOSFET. The MOSFET is connected to the analog front end and is used for bypassing the cell connected to the cell management unit when the MOSFET is turned on. As shown in Fig. 2 and Fig. 3, the MOSFETs corresponding to cells CELL_M1, CELL_M2, ..., CELL_Mn are Q_M1, Q_M2, ..., Q_Mn, respectively; and the MOSFETs corresponding to cells CELL_S1, CELL_S2, ..., CELL_Sn are Q_S1, Q_S2, ..., Q_Sn, respectively.

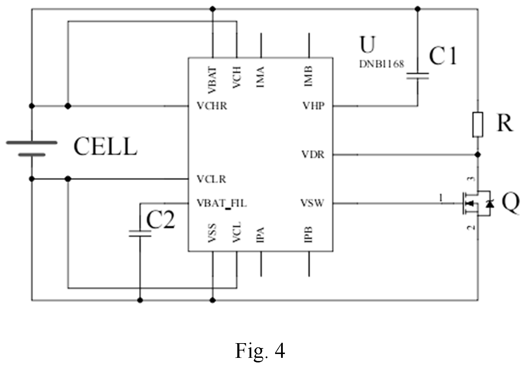

By way of example, referring to Fig. 4, which is a schematic circuit diagram of a cell management unit in a battery management system according to an embodiment of the present application, the cell management unit (including the AFE chip) is connected to the positive and negative terminals of a cell via VBAT and VSS to receive power for its operation. VCH and VCL are the collection ports for voltage of chip. VCHR and VCLR are functional interfaces for the chip to collect the internal resistance of chip. VSW is used for the cell bypass function in case of a fault and is connected to the MOSFET. The unit incorporates a built-in temperature measurement module capable of collecting cell temperature data. VBAT_FIL is an output pin with cell fault, VHP is an over-voltage protection pin, while IMA, IMB, and IPA, IPB constitute two-channel differential communication function interfaces, respectively. Based on the aforementioned circuit, when a cell experiences under-voltage or a fault, the first microcontroller unit or the second microcontroller unit can control the cell management unit to turn on the corresponding MOSFET Q, thereby bypassing the faulty cell without affecting the normal operation of the battery management system. This significantly enhances system robustness.

In one example, the battery management system further comprises a first isolation transformer and a second isolation transformer; wherein in the first set of cell management units, the first and last cell management units therein are respectively connected to the first microcontroller unit via one first isolation transformer; and one first isolation transformer is connected between every two adjacent cell management units; and in the second set of cell management units, the first and last cell management units therein are respectively connected to the second microcontroller unit via one second isolation transformer; and one second isolation transformer is connected between every two adjacent cell management units. Typically, isolated communication is required between cell management units, and the isolation devices commonly used are either isolation transformers or high-voltage capacitors.

In one example, the battery management system further comprises a first bridging unit and a second bridging unit; wherein, in the first set of cell management units, the first isolation transformers at the two ends are respectively connected to the first microcontroller unit via one first bridging unit; and in the second set of cell management units, the second isolation transformers at the two ends are respectively connected to the second microcontroller unit via one second bridging unit.

In a more optimized implementation, the first bridging unit and the second bridging unit employ a dual-channel SPI bridging circuit. By way of example, a chip such as the DNB1168 can serve as the first bridging unit or second bridging unit (the bridging unit incorporates a bridge chip), which is connected between the first microcontroller unit or second microcontroller unit and the cell management units, providing bidirectional ring-network SPI communication and utilizing pulse communication transformers for serial connection, thereby achieving excellent electrical isolation and reliable data transmission.

Using the cell management unit shown in Fig. 4 and employing a chip such as the DNB1168 as the bridge chip for the first bridging unit, and referring to Fig. 2, the communication ports IPA and IPB of the first cell management unit are connected to a first isolation transformer, and the other side of the first isolation transformer is connected to the bridge chip, which converts the differential signals of the Daisy-chain communication into SPI communication signals to achieve data interaction with the first microcontroller unit. The communication ports IMA and IMB of the last cell management unit are connected to another first isolation transformer, and the other side of this first isolation transformer is connected to another bridge chip, which likewise converts the differential signals of the Daisy-chain communication into SPI communication signals to achieve data interaction with the first microcontroller unit. The cell management units are interconnected via first isolation transformers or capacitors to form communication channels, thus the cell management units communicate with each other through their IPA, IPB, and IMA, IMB ports, and are ultimately connected to the first microcontroller unit, establishing a Daisy-chain serial communication for the lower 208 cells. It can be understood that the second microcontroller unit can achieve serial communication for the upper 208 cells in the same manner as described above, which will not be repeated here.

When hundreds of cells in the battery cluster are connected in series, the first microcontroller unit or second microcontroller unit outputs an SPI communication command, and this command is transmitted through a communication bridge chip (e.g., the DNB1168 chip) and an isolation transformer to the communication port of the first cell management unit, the data from the first cell is then packaged and pushed to the second cell management unit, and the second cell management unit collects cell parameters, combines this data with the data received from the first cell management unit, and forwards the packaged data to the third cell management unit. This process repeats sequentially along the chain until the data reaches the final cell management unit. The aggregated data packet is then received by a terminal bridge chip (e.g., model DNB1168), which converts it into an SPI communication signal and transmits it to the first microcontroller unit or the second microcontroller unit. At this point, all cell parameters (including cell voltage, temperature, and internal resistance) are collected by the first microcontroller unit and the second microcontroller unit. This communication circuit is designed as a Daisy-chain ring network, consequently, the first microcontroller unit or the second microcontroller unit can also collect all cell parameters from the terminal cell management unit back to the first cell management unit. Furthermore, if a communication port break occurs at any cell management unit within this ring-network communication topology circuit, the first microcontroller unit or the second microcontroller unit can issue commands from both ends simultaneously and collect all cell parameters from their respective ends, thereby eliminating the impact of an open circuit on data collection completeness.

In one example, a signal input/output terminal of the first microcontroller unit is connected to a pull-up resistor and/or a signal input/output terminal of the second microcontroller unit is connected to a pull-up resistor.

In one example, a signal input/output terminal, which connects the first bridging unit and/or the second bridging unit to the microcontroller unit, is connected to a current-limiting resistor or an inductor.

In one example, a signal input/output terminal, which connects the first bridging unit and/or the second bridging unit to a cell management unit, is connected to one end of a transient voltage suppression (TVS) diode, wherein another end of the transient voltage suppression diode is grounded.

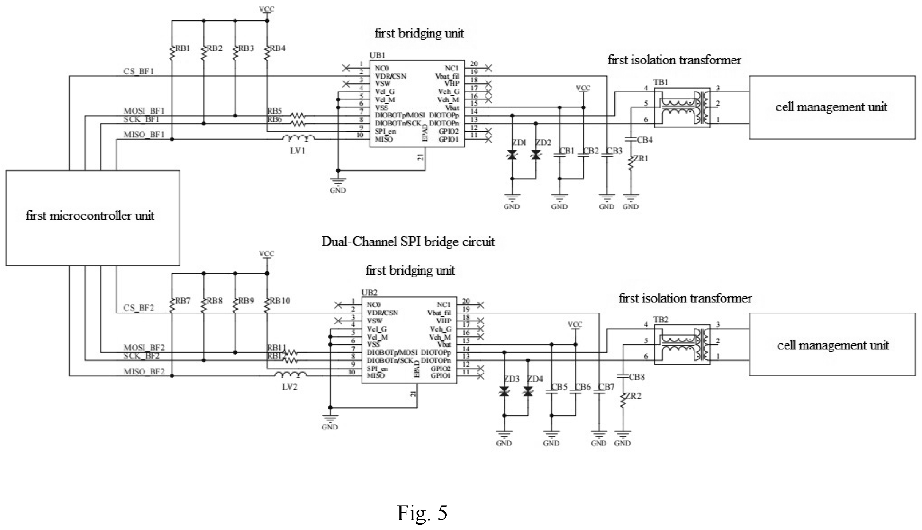

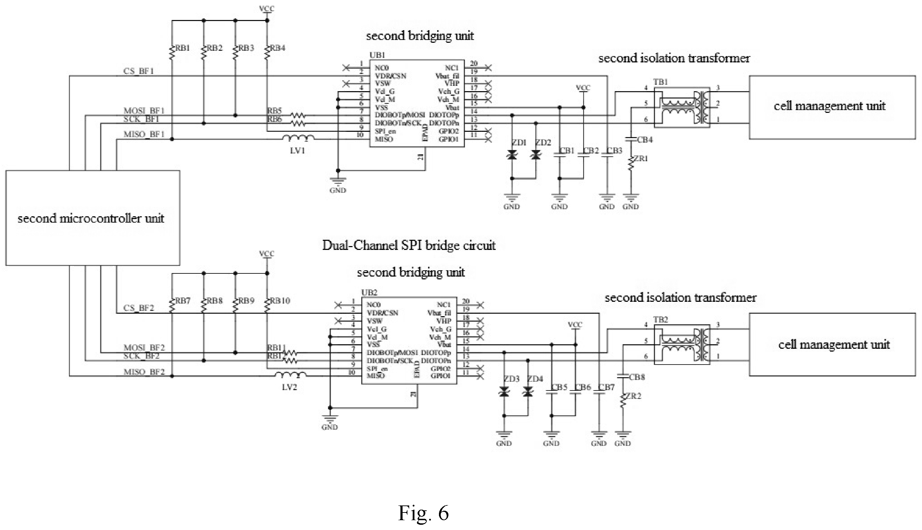

Fig. 5 is a schematic circuit diagram illustrating the connection between a first microcontroller unit and cell management units in a battery management system according to an embodiment of the present application. Fig. 6 is a schematic circuit diagram illustrating the connection between a second microcontroller unit and cell management units in the battery management system according to an embodiment of the present application. Referring to Fig. 5 and Fig. 6, the microcontroller unit (the first microcontroller unit or the second microcontroller unit) routes two SPI communication signals to be connected to the bridge circuits UB1 and UB2. The microcontroller unit is connected to the bridging units via four communication lines. Herein: CS_BF1 represents the SPI chip select signal line for bridging unit UB1, MOSI_BF1 represents the SPI Master-Out-Slave-In signal line for bridging unit UB1, SCK_BF1 represents the SPI clock signal line for bridging unit UB1, MISO_BF1 represents the SPI Master-In-Slave-Out signal line for bridging unit UB1, CS_BF2 represents the SPI chip select signal line for bridging unit UB2, MOSI_BF2 represents the SPI Master-Out-Slave-In signal line for bridging unit UB2, SCK_BF2 represents the SPI clock signal line for bridging unit UB2, and MISO_BF2 represents the SPI Master-In-Slave-Out signal line for bridging unit UB2. To ensure the initial state of the signals, pull-up resistors are connected to the signal input/output terminals of the microcontroller unit, such as RB1, RB2, RB3, RB4, as well as RB7, RB8, RB9, and RB10.

To protect the ports of the bridge chips, current-limiting resistors or inductors are connected to the signal input/output terminals that link the bridge chips to the microcontroller unit, and examples include resistors RB5, RB6, and inductor LV1 for bridge chip UB1, and resistors RB11, RB12, and inductor LV2 for bridge chip UB2.

At the signal input/output terminals DIOTO of the bridge chips, to ensure the long-distance transmission capability of the differential communication signals and their electrical isolation characteristics, the coil turn ratio of the isolation transformers TB1 and TB2 in this embodiment may be set to 1:1. The depicted isolation transformers can also feature high-frequency performance and common-mode rejection, thereby enabling data interaction with the cell management units.

Continuing to refer to Fig. 5 and Fig. 6, Transient Voltage Suppression (TVS) diodes are provided to protect the signal input/output ports of the bridge chips. The signal input/output terminals connecting the bridge chips to the cell management units are connected to one end of a TVS diode, with the other end of the TVS diode grounded, and examples include TVS diodes ZD1 and ZD2 for bridge chip UB1, and TVS diodes ZD3 and ZD4 for bridge chip UB2. By incorporating TVS diodes, surge impacts are effectively suppressed, preventing damage to the bridge chips.

In one example, the battery management system further comprises a storage unit. The storage unit is connected to the first microcontroller unit and the second microcontroller unit, and is used for storing the parameter signals and the control signals.

In some cases, a microcontroller unit primarily includes a controller, an Arithmetic Logic Unit and register, but lacks a storage unit, therefore, it is necessary to incorporate a separate storage unit for storing the parameter signals and control signals. With the storage unit integrated into the battery management system, the collection and transmission of parameters such as cell voltage and temperature for BAT_M in this embodiment are accomplished by the cell management units via Daisy-chain communication, and this data is then converted by the first bridging unit and the first microcontroller unit, enabling the calculation of collection accuracy for these parameters, and transfers the characteristic data to the storage unit. Similarly, the collection and transmission of parameters such as cell voltage and temperature for BAT_S are accomplished by the cell management units in the other loop through Daisy-chain communication, followed by signal conversion via the second bridging unit and the second microcontroller unit, enabling the calculation of collection accuracy for these parameters, and transferring the characteristic data to the storage unit. When data needs to be read from or written to the storage unit, the first microcontroller unit or the second microcontroller unit performs these read/write operations via a serial or parallel communication link.

The battery management system provided in this embodiment, wherein the collection unit with each cell management unit is directly connected to a cell and manage the cell directly, consequently, in contrast to existing battery management system where one BMU centrally controls all cells in a battery pack, the present battery management system employs one cell management unit for the refined management of each cell, means that it distributes the management function from a centralized slave controller for the entire battery pack to individual cell management units, so as to allow for more balanced workload of each component, thus reducing the risk of slave control failures. Furthermore, by implementing a configuration with a first microcontroller unit, a second microcontroller unit and two sets of cell management units, with the first microcontroller unit is connected to the second microcontroller unit, and the first microcontroller unit and the second microcontroller unit share one or more parameter signals and control signals, the battery management system can utilize both MCUs simultaneously to control the cell management unit during normal operation, and is responsible for collecting data from all cells, performing cell balancing and controlling external equipment, fully leveraging the utility of both MCUs. Moreover, if one MCU becomes abnormal, the other can maintain the normal operation of the battery management system, thereby ensuring safer and more reliable system performance.

Another embodiment of the present application provides an energy storage apparatus. The apparatus comprises at least one battery cluster formed by connecting a plurality of cells in series, and further comprises the battery management system according to the preceding embodiments. In the battery management system, each analog front end is connected to one cell. For specific details of the relevant units or modules in the battery management system of this embodiment, reference may be made to the preceding embodiments, which will not be repeated herein. Furthermore, other necessary components or assemblies of the illustrated energy storage apparatus are omitted for clarity.

The energy storage apparatus provided in this embodiment, by virtue of its improved battery management system, features a direct connection between each cell management unit within the collection unit and each cell, enabling direct management of each cell. This enables more refined management of cells and leads to a more balanced workload of each component, thus reducing the risk of slave control failures in slave controllers within existing battery management systems. Furthermore, it allows for full utilization of the two microcontroller units, resulting in enhanced system operational safety and reliability.

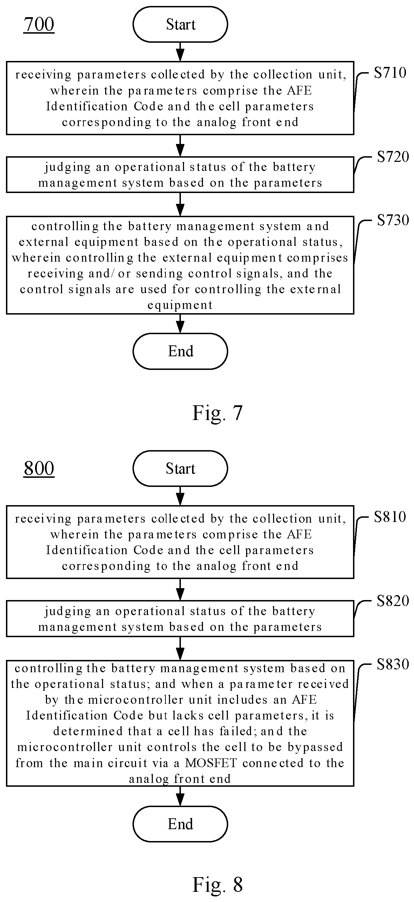

Another embodiment of the present application provides a battery management method. Referring to FIG. 7, which can be applied to the battery management system described in the preceding embodiments, the method 700 comprises: S710: Receiving parameters collected by the collection unit, wherein the parameters comprise the AFE Identification Code and the cell parameters corresponding to the analog front end. S720: Judging an operational status of the battery management system based on the parameters. S730: Controlling the battery management system and external equipment based on the operational status, wherein controlling the external equipment comprises receiving and/or sending control signals, and the control signals are used for controlling the external equipment.

In the battery management method provided by this embodiment, the collection unit can directly manage the cells, enabling more refined management. This allows for the collection of cell parameters and the assessment of the operational status of the battery management system based on these parameters. Consequently, the battery management efficiency is enhanced, and the risk of battery management system failure is reduced.

Another embodiment of the present application provides a battery management method. Referring to FIG. 8, which can be applied to the battery management system described in the preceding embodiments, the method 800 comprises: S810: Receiving parameters collected by the collection unit, wherein the parameters comprise the AFE Identification Code and the cell parameters corresponding to the analog front end. S820: Judging an operational status of the battery management system based on the parameters. S830: Controlling the battery management system based on the operational status; and when a parameter received by the microcontroller unit includes an AFE Identification Code but lacks cell parameters, it is determined that a cell has failed; and the microcontroller unit controls the cell to be bypassed from the main circuit via the MOSFET connected to the analog front end.

In this embodiment, under normal conditions, the microcontroller unit receives data comprising a corresponding AFE Identification Code, a cell identification code, and cell data such as temperature, voltage, and current. When a specific cell is abnormal, the parameters received by the microcontroller unit only include an AFE Identification Code, lacking any cell parameters, and the system can judge the existence of an anomaly based on the collected parameters. When a cell anomaly is detected, the microcontroller unit controls the MOSFET to bypass the faulty cell, allowing other cells to continue operating.

In one example, the step of judging the operational status of the battery management system based on the parameters further comprises: when the quantity of the AFE Identification Code in the parameters collected by the collection unit is less than the quantity of the analog front ends in the collection unit, comparing the returned AFE Identification Code in the parameters collected by the collection unit with the identification codes of the analog front ends in the collection unit to determine the failed analog front end; and controlling external equipment to issue an alarm indicating the failure of the analog front end.

In this embodiment, if a specific analog front end is abnormal, the faulty analog front end ceases to collect parameters from its cell, consequently resulting in no data being received from it. For example, if there are 10 AFEs and one fails, the cells continue to operate, but the returned data contains only 9 sets of parameters. In this case, by comparing and identifying which AFE Identification Code is missing, the specific faulty AFE can be pinpointed. When an AFE failure is determined, the battery management system triggers an alarm and reports the identification code of the damaged AFE.

For other details regarding the battery management system executing the method of this embodiment, reference may be made to the preceding embodiments, which will not be reiterated here.

The battery management method provided in this embodiment can effectively identify both cell anomalies and analog front end anomalies within the battery management system. In the case of a cell failure, the microcontroller unit bypasses the cell from the main circuit via the MOSFET connected to the AFE. When an AFE anomaly is detected, it controls external equipment to issue an alarm indicating the failure of that specific AFE. This significantly enhances the operational safety and reliability of the battery management system.

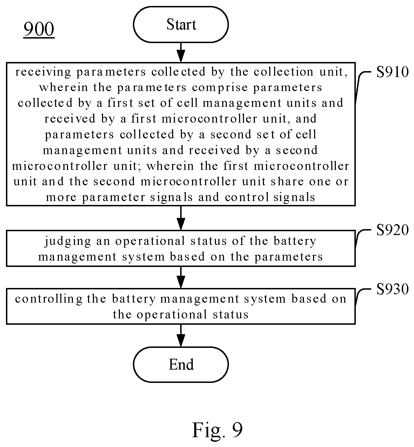

Another embodiment of the present application provides a battery management method. Referring to FIG. 9, which can be applied to the battery management system described in the preceding embodiments, the method 900 comprises: S910: Receiving parameters collected by the collection unit, wherein the parameters comprise parameters collected by a first set of cell management units and received by a first microcontroller unit, and parameters collected by a second set of cell management units and received by a second microcontroller unit; wherein the first microcontroller unit and the second microcontroller unit share one or more parameter signals and control signals. S920: Judging an operational status of the battery management system based on the parameters. S930: Controlling the battery management system based on the operational status; wherein when the first microcontroller unit detects that data of the second microcontroller unit is inaccessible, the first microcontroller unit controls external equipment to disconnect from the second microcontroller unit, and disconnects cells connected to the second microcontroller unit from a main circuit; when the second microcontroller unit detects that data of the first microcontroller unit is inaccessible, the second microcontroller unit controls the external equipment to disconnect from the first microcontroller unit, and disconnects cells connected to the first microcontroller unit from the main circuit.

For other details regarding the battery management system executing the method of this embodiment, reference may be made to the preceding embodiments, which will not be reiterated here.

The battery management method provided in this embodiment enables the system to utilize both microcontroller units simultaneously during normal operation. This allows for tasks such as data collection from all cells, cell balancing, and control of external equipment to be performed efficiently, fully leveraging the utility of both microcontroller units. Moreover, if one microcontroller unit becomes abnormal, the other can maintain the normal operation of the battery management system, thereby ensuring safer and more reliable system performance.

The basic concepts have been described above. Obviously, for those skilled in the art, the above application disclosures are only examples and do not constitute limitations to the present application. Although not explicitly stated herein, those skilled in the art may make various modifications, improvements, and corrections to the present application. Such modifications, improvements and corrections are suggested in the present application, so such modifications, improvements and corrections still fall within the spirit and scope of the exemplary embodiments of the present application.

## Claims

1. A battery management system, **characterized by** comprising:
a microcontroller unit and a collection unit, wherein the microcontroller unit is used for receiving and/or sending a control signal, and the collection unit is used for collecting cell parameters, wherein
two ends of the collection unit are connected to the microcontroller unit, and the collection unit comprises at least one cell management unit, each cell management unit is provided with an analog front end, each analog front end is used for connecting to one cell for collection of the cell parameters;
the microcontroller unit comprises a first microcontroller unit and a second microcontroller unit, and the cell management unit comprises a first set of cell management units and a second set of cell management units, wherein
the first set of cell management units is connected to the first microcontroller unit, and the second set of cell management units is connected to the second microcontroller unit, and
each cell management unit in the first set of cell management units is used for connecting to one cell, and each cell management unit in the second set of cell management units is used for connecting to one cell, so as to collect the cell parameters, and
the first microcontroller unit is connected to the second microcontroller unit, and the first microcontroller unit and the second microcontroller unit share one or more parameter signals and control signals.

2. The battery management system according to claim 1, **characterized in that** wherein the parameter signals comprise cell parameters and an AFE Identification Code, and the control signals comprise control signals of external equipment and control signals of collection unit.

3. The battery management system according to claim 1, **characterized by** further comprising a first isolation transformer and a second isolation transformer, wherein
in the first set of cell management units, the first and last cell management units therein are respectively connected to the first microcontroller unit via one first isolation transformer, and one first isolation transformer is connected between every two adjacent cell management units, and
in the second set of cell management units, the first and last cell management units therein are respectively connected to the second microcontroller unit via one second isolation transformer, and one second isolation transformer is connected between every two adjacent cell management units.

4. The battery management system according to claim 3, **characterized by** further comprising a first bridging unit and a second bridging unit,wherein,
in the first set of cell management units, the first isolation transformers at the two ends are respectively connected to the first microcontroller unit via one first bridging unit; and
in the second set of cell management units, the second isolation transformers at the two ends are respectively connected to the second microcontroller unit via one second bridging unit.

5. The battery management system according to claim 4, **characterized in that** wherein the first bridging unit and the second bridging unit employ a dual-channel SPI bridging circuit.

6. The battery management system according to claim 4, **characterized in that** wherein a signal input /output terminal of the first microcontroller unit is connected to pull-up resistor and/or a signal input/output terminal of the second microcontroller unit is connected to pull-up resistor.

7. The battery management system according to claim 4, **characterized in that** wherein a signal input/output terminal, which connects the first bridging unit and/or the second bridging unit to the microcontroller unit, is connected to a current-limiting resistor or an inductor.

8. The battery management system according to claim 4, **characterized in that** wherein a signal input/output terminal, which connects the first bridging unit and/or the second bridging unit to a cell management unit, is connected to one end of a transient voltage suppression diode, wherein another end of the transient voltage suppression diode is grounded.

9. The battery management system according to claim 1, **characterized by** comprising further comprising a storage unit, wherein the storage unit is connected to the first microcontroller unit and the second microcontroller unit, and is used for storing the parameter signals and the control signals.

10. The battery management system according to claim 1, **characterized in that** wherein the first microcontroller unit and the second microcontroller unit are connected via a serial or parallel communication link.

11. The battery management system according to any one of claims 1 to 10, **characterized in that** wherein the cell management unit is further provided with a MOSFET, wherein the MOSFET is connected to the analog front end and is used for bypassing the cell connected to the cell management unit when the MOSFET is turned on.

12. An energy storage apparatus, **characterized by** comprising at least one battery cluster formed by a plurality of cells connected in series, further comprising the battery management system according to any one of claims 1 to 11, and each analog front end in the battery management system is connected to one cell.

13. A battery management method, **characterized in that** wherein it is applied to the battery management system according to any one of claims 1 to 11, and comprises the steps of:
receiving parameters collected by the collection unit, wherein the parameters comprise the AFE Identification Code and the cell parameters corresponding to the analog front end;
judging an operational status of the battery management system based on the parameters;
controlling the battery management system and external equipment based on the operational status, wherein controlling the external equipment comprises receiving and/or sending control signals, and the control signals are used for controlling the external equipment.

14. A battery management method, **characterized in that** wherein it is applied to the battery management system according to claim 11, and comprises the steps of:
receiving parameters collected by the collection unit, wherein the parameters comprise the AFE Identification Code and the cell parameters corresponding to the analog front end;
judging an operational status of the battery management system based on the parameters;
controlling the battery management system based on the operational status, and when a parameter received by the microcontroller unit includes an AFE Identification Code but lacks cell parameters, it is determined that a cell has failed, and the microcontroller unit controls the cell to be bypassed from the main circuit via a MOSFET connected to the analog front end.

15. The battery management method according to claim 14, **characterized in that** wherein the step of judging the operational status of the battery management system based on the parameters further comprises:
when the quantity of the AFE Identification Code in the parameters collected by the collection unit is less than the quantity of the analog front ends in the collection unit, comparing the returned AFE Identification Code in the parameters collected by the collection unit with identification codes of the analog front ends in the collection unit to determine the failed analog front end, and controlling external equipment to issue an alarm indicating the failure of the analog front end.

16. A battery management method, **characterized in that** wherein it is applied to the battery management system according to any one of claims 1 to 11, and comprises the steps of:
receiving parameters collected by the collection unit, wherein the parameters comprise parameters collected by a first set of cell management units and received by a first microcontroller unit, and parameters collected by a second set of cell management units and received by a second microcontroller unit, wherein the first microcontroller unit and the second microcontroller unit share one or more parameter signals and control signals;
judging an operational status of the battery management system based on the parameters;
controlling the battery management system based on the operational status, wherein
when the first microcontroller unit detects that data of the second microcontroller unit is inaccessible, the first microcontroller unit controls external equipment to disconnect from the second microcontroller unit, and disconnects cells connected to the second microcontroller unit from a main circuit;
when the second microcontroller unit detects that data of the first microcontroller unit is inaccessible, the second microcontroller unit controls the external equipment to disconnect from the first microcontroller unit, and disconnects cells connected to the first microcontroller unit from the main circuit.
